# EUROPEAN PATENT APPLICATION

(11) **EP 4 846 852 A1**
(43) Date of publication of application: **02.12.2026**
(21) Application number: 25744521.3
(22) Date of filing: 17.01.2025
(51) Int. Cl.: A21C 9/06, A47J 43/20, A23L 35/00

(54) **FORMING METHOD FOR STUFFED FOOD**

(30) Priority: 26.01.2024 CN 202410133606
(71) Applicant: Chen, Qifeng, Shenzhen, Guangdong 518107 (CN)
(72) Inventor: CHEN, Qifeng, Shenzhen, Guangdong 518034 (CN)
(74) Representative: Fabry, Bernd
(86) International application number: PCT/CN2025/072974
(87) International publication number: WO 2025/157080

(57) **Abstract**

The present disclosure discloses a forming method for stuffed food, belonging to the technical field of food processing. In a forming method for stuffed food, a dough wrapper (3) is placed on a horizontal table top or in a concave die, a stuffing (4) is dropped to fill the center of the dough wrapper (3), the dough wrapper (3) on the periphery of the stuffing (4) is raised, and a clamping device (2) is used to clamp the edge portion of the dough wrapper (3); the dough wrapper (3) and the stuffing (4) are lifted and placed into a sealing device; sealing blades are closed to complete sealing of the dough wrapper (3). The present disclosure achieves the thin-wrapper and large-stuffing effect of the stuffed food, and implements automatic mechanical wrapping.

## Description

### Technical Field

The present disclosure relates to the technical field of food processing, and in particular to a forming method for stuffed food.

### Background Art

Stuffed food is a traditional Chinese delicacy with a long history. With technological advances and iterative updates, mechanical automation has penetrated deeply into the food processing industry, and the mechanized automation of stuffed food is gradually replacing hand-made stuffed food. Common stuffed foods include stuffed buns, stuffed pastries, and the like. However, currently machine-processed stuffed foods are inferior to hand-wrapped ones in terms of appearance, thinness of the dough wrapper, and fullness of the stuffing, which are technical difficulties that researchers need to consider and solve.

Currently, there are two types of production equipment for stuffed food: one type involves placing dough into a hopper, where two augers extrude the dough downward; the dough passes through a mold and is extruded in a tubular form, while stuffing is fed into the tubular dough and falls into a sealing device for sealing and cutting to form the product. The other type involves rolling out a large sheet of dough with rollers, then rolling the dough sheet into a tubular form, while stuffing is fed into the tubular dough and falls into a sealing device for sealing and cutting to form the product. The drawbacks of these two types of equipment are: in the former type, the auger extrusion of the dough tends to damage the gluten network, and the dough is prone to heating; in both types of equipment, the stuffing is continuously fed by a screw conveyor, which tends to heat the stuffing and alter its taste; moreover, the equipment imposes requirements on the type of stuffing and limits the diversity of stuffings; neither type of existing equipment can achieve a thin-wrapper and large-stuffing effect of the stuffed food.

Currently, there are two types of semi-manual production methods: one involves forming the dough into a cup-shaped dough wrapper, placing the stuffing therein, and then placing it into a sealing device for sealing; the other involves placing the dough wrapper flat, placing the stuffing thereon, using clamping claws to raise the dough wrapper around the stuffing, gathering the edges of the dough wrapper together, and using a sealing device at the top of the clamping claws to seal the dough wrapper. The drawbacks of both methods are: the former is suitable for relatively stiff dough with a moisture content of less than 40%; both methods result in products with thick wrappers and fail to achieve a thin-wrapper and large-stuffing effect. A dough moisture content of 40% refers to a water-to-flour ratio of 40:100 during dough mixing.

### SUMMARY

The object of the present disclosure is to provide a forming method for stuffed food, which enables machine-processed stuffed food to have a generous stuffing and achieve a thin-wrapper and large-stuffing effect.

To achieve the above object, the present disclosure adopts the following technical solution:
A forming method for stuffed food, wherein a dough wrapper is placed on a horizontal table top or into a concave die, a stuffing is dropped to fill the center of the dough wrapper, and the dough wrapper on the periphery of the stuffing is raised, comprising the following steps: after the dough wrapper is raised, using a clamping device to clamp the edge portion of the dough wrapper; lifting the dough wrapper and the stuffing and then placing them into a sealing device; closing sealing blades to complete sealing of the dough wrapper; the bottom of the dough wrapper is either suspended in the air or supported by a supporting member at the bottom; after the dough wrapper on the periphery of the stuffing is raised, there are three states: a first state, in which the edges of the dough wrapper are gathered together; a second state, in which an object is placed at the center of the dough wrapper and the edges of the dough wrapper are gathered around the object; and a third state, in which the edges of the dough wrapper are not gathered together.

Preferably, the manner in which the clamping device clamps the edge portion of the dough wrapper is: when the edges of the dough wrapper are gathered together, the clamping device is used to clamp the edge portion of the dough wrapper.

Preferably, the manner in which the clamping device clamps the edge portion of the dough wrapper is: when an object is placed at the center of the dough wrapper, and the edges of the dough wrapper are gathered around the object, the clamping device is used to clamp the edge portion of the dough wrapper; the bottom surface of the object is higher than the position where the sealing blades are closed.

Preferably, the manner in which the clamping device clamps the edge portion of the dough wrapper is: when the edges of the dough wrapper are not gathered together, the clamping device is used to clamp the edge portion of the dough wrapper.

Preferably, when the edges of the dough wrapper are gathered together, a set of clamping claws is used to clamp the edge portion of the dough wrapper.

Preferably, when an object is placed at the center of the dough wrapper, and the edges of the dough wrapper are gathered around the object, a set of clamping claws is used to clamp the edge portion of the dough wrapper.

Preferably, when the edges of the dough wrapper are not gathered together, a set of clips arranged around the edge of the dough wrapper is used to clamp the edge portion of the dough wrapper.

A forming method for stuffed food, wherein a dough wrapper is placed on a horizontal table top or in a concave die, a stuffing is dropped to fill the center of the dough wrapper, and the dough wrapper on the periphery of the stuffing is raised, comprising the following steps: after the dough wrapper is raised, using needles to pierce the edge portion of the dough wrapper in a horizontal direction; lifting the dough wrapper and the stuffing and then placing them into a sealing device; closing sealing blades to complete sealing of the dough wrapper; the bottom of the dough wrapper is either suspended in the air or supported by a supporting member at the bottom; after the dough wrapper on the periphery of the stuffing is raised, there are three states: a first state, in which the edges of the dough wrapper are gathered together; a second state, in which an object is placed at the center of the dough wrapper and the edges of the dough wrapper are gathered around the object; and a third state, in which the edges of the dough wrapper are not gathered together.

The beneficial effects of the present disclosure are: using rolled dough wrappers makes it easy to control the thickness of the dough wrapper; the clamping device lifts the dough wrapper and the stuffing, stretching the dough wrapper in the vertical direction to make it thinner, such that the upper portion of the finished product has a thin wrapper after sealing, achieving a thin-wrapper and large-stuffing effect; applicable to dough wrappers of various moisture contents, and equally suitable for dough wrappers with high moisture content greater than 50%; the technical solution of the present disclosure enables automated mechanical production of stuffed food.

### BRIEF DESCRIPTION OF THE DRAWINGS

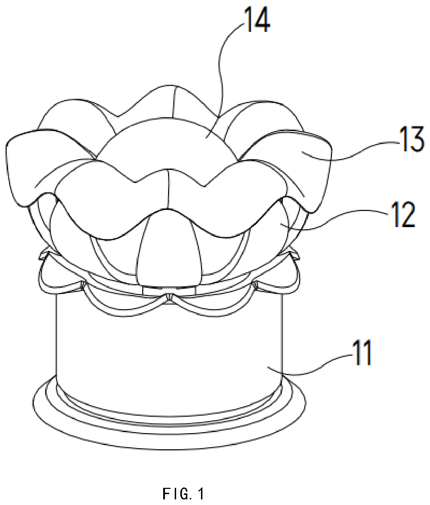

FIG. 1 is a schematic view of a first set of clamping claws being placed with a dough wrapper and a stuffing;

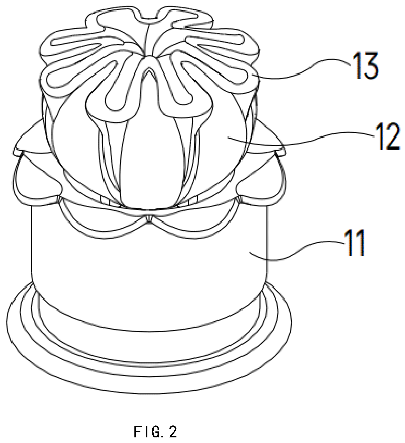

FIG. 2 is a schematic view of the first set of clamping claws closing to raise the dough wrapper on the periphery of the stuffing, with the edges of the dough wrapper gathered together;

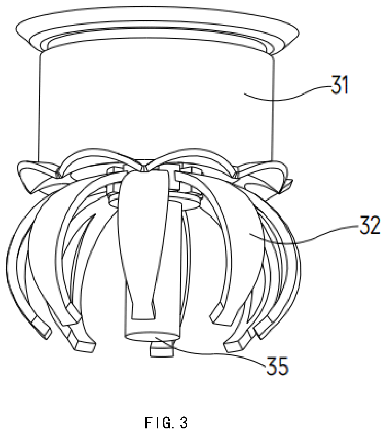

FIG. 3 is a schematic view of a third set of clamping claws in an open state with a column in the center;

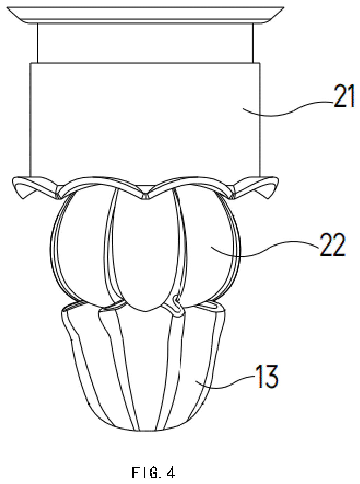

FIG. 4 is a schematic view of a second set of clamping claws clamping the edge of the dough wrapper;

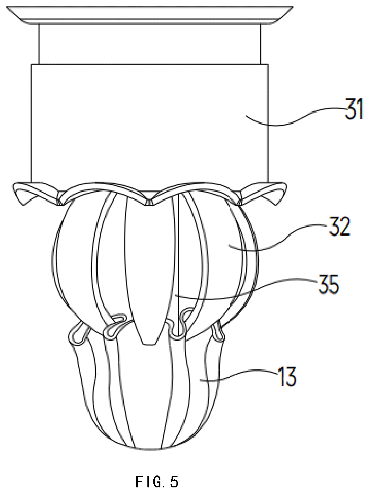

FIG. 5 is a schematic view of the third set of clamping claws clamping the edge of the dough wrapper with a column in the center;

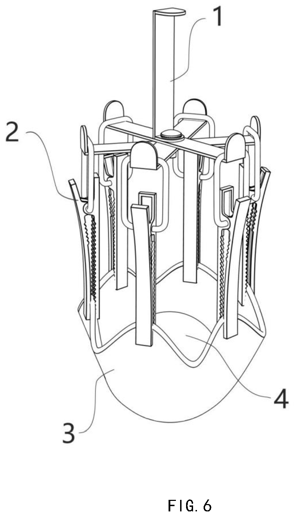

FIG. 6 is a schematic view of clips clamping and raising the edge of the dough wrapper;

**Description of reference numerals:** 1, support frame; 2, clips; 3, dough wrapper; 4, stuffing; 11, first set of clamping claw housing; 12, first set of clamping claws; 13, dough wrapper; 14, stuffing; 21, second set of clamping claw housing; 22, second set of clamping claws; 31, third set of clamping claw housing; 32, third set of clamping claws; 35, column.

### DETAILED DESCRIPTION OF THE EMBODIMENTS

The described embodiments are merely a part of the embodiments of the present disclosure, rather than all of the embodiments. In the following embodiments, the clamping and lifting processes are performed manually.

### Embodiment 1:

A dough wrapper 13 having a diameter of 9.5 cm, a thickness of 2 mm, a weight of 29 g, and a moisture content of 50% is placed on a horizontal table top. A stuffing 14 weighing 23 g is dropped to fill the center of the dough wrapper. The dough wrapper 13 and the stuffing 14 are transferred into the clamping claws. The first set of clamping claws 12 is used to raise the dough wrapper 13 on the periphery of the stuffing 14, with the edges of the dough wrapper 13 gathered together. The second set of clamping claws 22 is used to clamp the edge portion of the dough wrapper 13. The first set of clamping claws 12 is released. The second set of clamping claws 22 is used to lift the dough wrapper 13 and the stuffing 14, and place them into a sealing device. The sealing blades are closed to complete sealing. The finished product weighs 43 g.

The sealing device is a set of blades that closes toward the center to seal the dough wrapper, while cutting off the excess dough wrapper at the upper portion, and may also simultaneously press pleats onto the upper portion of the finished product.

The sealing position is below the clamping device and above the stuffing. Selecting an appropriate sealing position can make the dough wrapper at the upper portion of the finished product sufficiently thin.

The first set of clamping claws 12 is suitable for dough wrappers with a diameter of approximately 9.5 cm.

### Embodiment 2:

A dough wrapper having a diameter of 14 cm, a thickness of 2.5 mm, a weight of 50 g, and a moisture content of 55% is placed in a concave die. A stuffing weighing 50 g is dropped to fill the center of the dough wrapper. The dough wrapper and the stuffing are transferred into the clamping claws. The clamping claws are used to raise the dough wrapper on the periphery of the stuffing, with the edges of the dough wrapper gathered together. The second set of clamping claws 22 is used to clamp the edge portion of the dough wrapper. The lower clamping claws are released. The second set of clamping claws 22 is used to lift the dough wrapper and the stuffing, and place them into a sealing device to complete sealing. The finished product weighs 88 g.

Placing the dough wrapper in a concave die can increase the amount of stuffing that can be filled.

### Embodiment 3:

A dough wrapper having a diameter of 11 cm, a thickness of 0.7 mm, a weight of 14 g, and a moisture content of 40% is placed on a horizontal table top. A stuffing weighing 25 g is dropped to fill the center of the dough wrapper. The dough wrapper and the stuffing are transferred into the clamping claws. The clamping claws are used to raise the dough wrapper on the periphery of the stuffing, with the edges of the dough wrapper gathered together. The second set of clamping claws 22 is used to clamp the edge portion of the dough wrapper. The lower clamping claws are released. The second set of clamping claws 22 is used to lift the dough wrapper and the stuffing, and place them into a sealing device to complete sealing. The finished product weighs 35 g.

### Embodiment 4:

A dough wrapper having a diameter of 14 cm, a thickness of 0.9 mm, a weight of 38 g, and a moisture content of 55% is placed in a concave die. A stuffing weighing 50 g is dropped to fill the center of the dough wrapper. The dough wrapper and the stuffing are transferred into the clamping claws. The clamping claws are used to raise the dough sheet on the periphery of the stuffing, with the edges of the dough wrapper gathered together. The second set of clamping claws 22 is used to clamp the edge portion of the dough wrapper. The lower clamping claws are released. The second set of clamping claws 22 is used to lift the dough wrapper and the stuffing. A supporting member is used to support the bottom of the dough wrapper. The assembly is placed into a sealing device. The sealing blades are closed to complete sealing. The finished product weighs 81 g.

In the case of a thin dough wrapper with high moisture content and heavy stuffing, the supporting member is used to support the bottom of the dough wrapper to prevent the dough wrapper from tearing after being lifted.

### Embodiment 5:

A dough wrapper 13 having a diameter of 9.5 cm, a thickness of 2 mm, a weight of 29 g, and a moisture content of 50% is placed on a horizontal table top. A stuffing 14 weighing 23 g is dropped to fill the center of the dough wrapper. The first set of clamping claws 12 is used to raise the dough wrapper 13 on the periphery of the stuffing 14, with the edges of the dough wrapper 13 gathered around the column 35. The third set of clamping claws 32 is used to clamp the edge portion of the dough wrapper 13. The first set of clamping claws 12 is released. The third set of clamping claws 32 is used to lift the dough wrapper 13 and the stuffing 14, and place them into a sealing device to complete sealing. The finished product weighs 43 g.

The bottom surface of the column is higher than the position where the sealing blades are closed.

### Embodiment 6:

A dough wrapper having a diameter of 14 cm, a thickness of 2.5 mm, a weight of 50 g, and a moisture content of 55% is placed in a concave die. A stuffing weighing 50 g is dropped to fill the center of the dough wrapper. The dough wrapper and the stuffing are transferred into the clamping claws. The clamping claws are used to raise the dough wrapper on the periphery of the stuffing, with the edges of the dough wrapper gathered around the column 35. The third set of clamping claws 32 is used to clamp the edge portion of the dough wrapper. The lower clamping claws are released. The third set of clamping claws 32 is used to lift the dough wrapper and the stuffing, and place them into a sealing device to complete sealing. The finished product weighs 88 g.

The bottom surface of the column is higher than the position where the sealing blades are closed.

### Embodiment 7:

A dough wrapper 3 having a diameter of 9.5 cm, a thickness of 2 mm, a weight of 29 g, and a moisture content of 50% is placed on a horizontal table top. A stuffing 4 weighing 23 g is dropped to fill the center of the dough wrapper. Six clips 2 are used, evenly distributed around the edge of the dough wrapper, and the clips 2 are used to clamp the edge portion of the dough wrapper. The clips 2 are raised and suspended on a support frame 1. The support frame 1 is lifted to suspend the dough wrapper 3 and the stuffing 4. The assembly is placed into a sealing device to complete sealing. The finished product weighs 43 g.

Each clip has a width of 3.5 mm, and the clamping force at the clamping position on the dough wrapper is 22 g.

### Embodiment 8:

A dough wrapper 13 having a diameter of 9.5 cm, a thickness of 2 mm, a weight of 29 g, and a moisture content of 50% is placed on a horizontal table top. A stuffing 14 weighing 23 g is dropped to fill the center of the dough wrapper. The first set of clamping claws 12 is used to raise the dough wrapper 13 on the periphery of the stuffing 14, with the edges of the dough wrapper 13 gathered together. Two 10 cm long needles are used to pierce the edge portion of the dough wrapper 13 in a horizontal direction. The first set of clamping claws 12 is released. The needles are lifted to suspend the dough wrapper 13 and the stuffing 14. The assembly is placed into a sealing device. The sealing blades are closed to complete sealing. The finished product weighs 43 g.

### Embodiment 9:

A dough wrapper having a diameter of 14 cm, a thickness of 2.5 mm, a weight of 50 g, and a moisture content of 55% is placed in a concave die. A stuffing weighing 50 g is dropped to fill the center of the dough wrapper. The dough wrapper and the stuffing are transferred into the clamping claws. The clamping claws are used to raise the dough wrapper on the periphery of the stuffing, with the edges of the dough wrapper gathered together. Two 10 cm long needles are used to pierce the edge portion of the dough wrapper in a horizontal direction. The lower clamping claws are released. The needles are lifted to suspend the dough wrapper and the stuffing. A supporting member is used to support the bottom of the dough wrapper. The assembly is placed into a sealing device. The sealing blades are closed to complete sealing. The finished product weighs 88 g.

In the case of a thin dough wrapper with high moisture content and heavy stuffing, the supporting member is used to support the bottom of the dough wrapper to prevent the dough wrapper from tearing after being lifted.

The above are merely preferred specific embodiments of the present disclosure, but the scope of protection of the present disclosure is not limited thereto. Any equivalent substitutions or modifications made by any person skilled in the art within the technical scope disclosed by the present disclosure, based on the technical solution of the present disclosure and its inventive concept, shall fall within the scope of protection of the present disclosure.

## Claims

1. A forming method for stuffed food, wherein a dough wrapper is placed on a horizontal table top or into a concave die, a stuffing is dropped to fill the center of the dough wrapper, and the dough wrapper on the periphery of the stuffing is raised, **characterized in that**:
comprising the following steps: after the dough wrapper is raised, using a clamping device to clamp the edge portion of the dough wrapper; lifting the dough wrapper and the stuffing and then placing them into a sealing device; closing sealing blades to complete sealing of the dough wrapper; the bottom of the dough wrapper is either suspended in the air or supported by a supporting member at the bottom; after the dough wrapper on the periphery of the stuffing is raised, there are three states: a first state, in which the edges of the dough wrapper are gathered together; a second state, in which an object is placed at the center of the dough wrapper and the edges of the dough wrapper are gathered around the object;
and a third state, in which the edges of the dough wrapper are not gathered together.

2. The method according to claim 1, **characterized in that** the manner in which the clamping device clamps the edge portion of the dough wrapper is: when the edges of the dough wrapper are gathered together, the clamping device is used to clamp the edge portion of the dough wrapper.

3. The method according to claim 1, **characterized in that** the manner in which the clamping device clamps the edge portion of the dough wrapper is: when an object is placed at the center of the dough wrapper, and the edges of the dough wrapper are gathered around the object, the clamping device is used to clamp the edge portion of the dough wrapper; the bottom surface of the object is higher than the position where the blades are closed.

4. The method according to claim 1, **characterized in that** the manner in which the clamping device clamps the edge portion of the dough wrapper is: when the edges of the dough wrapper are not gathered together, the clamping device is used to clamp the edge portion of the dough wrapper.

5. The method according to claim 2, **characterized in that**: when the edges of the dough wrapper are gathered together, a set of clamping claws is used to clamp the edge portion of the dough wrapper.

6. The method according to claim 3, **characterized in that**: when an object is placed at the center of the dough wrapper, and the edges of the dough wrapper are gathered around the object, a set of clamping claws is used to clamp the edge portion of the dough wrapper.

7. The method according to claim 4, **characterized in that** : when the edges of the dough wrapper are not gathered together, a set of clips arranged around the edge of the dough wrapper is used to clamp the edge portion of the dough wrapper.

8. A forming method for stuffed food, wherein a dough wrapper is placed on a horizontal table top or in a concave die, a stuffing is dropped to fill the center of the dough wrapper, and the dough wrapper on the periphery of the stuffing is raised, **characterized in that**: comprising the following steps: after the dough wrapper is raised, using needles to pierce the edge portion of the dough wrapper in a horizontal direction; lifting the dough wrapper and the stuffing and then placing them into a sealing device; closing sealing blades to complete sealing of the dough wrapper; the bottom of the dough wrapper is either suspended in the air or supported by a supporting member at the bottom; after the dough wrapper on the periphery of the stuffing is raised, there are three states: a first state, in which the edges of the dough wrapper are gathered together; a second state, in which an object is placed at the center of the dough wrapper and the edges of the dough wrapper are gathered around the object; and a third state, in which the edges of the dough wrapper are not gathered together.
